(19) Europäisches Patentamt / European Patent Office / Office européen des brevets

(11) **EP 1 950 540 A1**

(12) **EUROPEAN PATENT APPLICATION**

(43) Date of publication:
**30.07.2008 Bulletin 2008/31**

(51) Int Cl.:
*G01J 1/42* (2006.01)          *B64G 1/36* (2006.01)
*G01S 3/786* (2006.01)          *G05D 1/08* (2006.01)

(21) Application number: **07100968.2**

(22) Date of filing: **23.01.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **Oerlikon Space AG
8052 Zürich (CH)**

(72) Inventors:
 • **Charbon, Edoardo
   1026, Echandens (CH)**

 • **Krpoun, Renato
   2000, Neuchâtel (CH)**
 • **Scheidegger, Noémy
   1005, Lausanne (CH)**
 • **Shea, Herbert
   2036, Cormondrèche (CH)**

(74) Representative: **OK pat AG
Chamerstrasse 50
6300 Zug (CH)**

Remarks:
Amended claims in accordance with Rule 137(2)
EPC.

(54) **Method and apparatus to determine a planet vector**

(57)   The present invention relates to a method for a low cost Planet vector Sensor based on imaging atmospheric oxygen emission at 762 nm or at 557.7 wavelengths using either CMOS, CCD or arrays of single photon avalanche diodes (SPADs). In both daytime and night time, there is continuous emission at 762 nm wavelength due to atomic oxygen recombination or excitation. Even if the emission at the limbs is 100 times stronger in the day than at night, there is ample unambiguous signal for the operation of the sensor according to the present invention using this wavelength if measured with an appropriate detector (82) and an adapted algorithm to determine the Planet vector.

Fig. 6

**Description**

Field of the invention

The present invention relates to the development of a low-cost method and an apparatus to determine a Planet vector.

Background of the invention

Available Planet Vector Sensors (PVS) are based on the measurement of the Planet's infrared radiation (typically between 14 and 16 $\mu$m for Earth) to determine the vector to the Planet's center. Standard designs use bolometers, thermopiles or semiconductor-based detectors, often combined with scanning mirrors to provide excellent accuracies (tens of milli-degrees) over a large field of view. However, these designs are heavy, large, require cooling or temperature stabilization and consume quite some power. In addition, the sensor concept for a LEO (Low Planet/Earth Orbit) or GEO (Geosychronous Orbit) Planet Vector Sensor differs significantly, typically requiring two different design and qualification procedures and therefore increasing the Planet Vector Sensors cost.

The availability of low cost Planet Vector Sensors would allow Planet Vector Sensors to be used in new scenarios and to improve system reliability by providing a low-cost back-up sensor. Examples of applications where neither milli-degree accuracy nor operation at high angular rates are required, but where low-cost is essential and lower (about 1° to 5°) accuracy is acceptable, include:

- LEO Initial Acquisition and Safe Mode Sensor,
- GEO and LEO Back-up sensor for Planet-pointing safe modes,
- GEO Planet Presence Anomaly Sensor.

Approximate requirements for such Planet Vector Sensors are an accuracy of 0.5° for GEO and 5° for LEO, mass of under 750g, and power consumption of less than 5 W. Scanning optics and shutters must be avoided for reliability considerations, and the Planet Vector Sensors must be capable of staring at the sun for over 10 hours with no damage.

In order to reduce cost, non-traditional approaches have to be taken with respect to the wavelength band used for observation, the detector technology, and the algorithms.

SUMMARY OF THE INVENTION

The present invention relates to a concept for a low cost Planet Vector Sensor based on imaging atmospheric oxygen emission at 762 nm or at 557.7 nm using either CMOS (Complementary Metal Oxide Semiconductor), CCD (Charge Coupled Devices) or arrays of single photon avalanche diodes (SPADs).

For the planet Earth, Oxygen emission at 557.7 nm and 762 nm is sufficiently bright under all sun illumination conditions (night, day), when viewed from LEO or GEO, to allow continuous determination of the Earth vector. The oxygen radiation is present even during eclipse, allowing nighttime operation.

A similar approach can be taken on other Planets, such as Venus, but potentially based on light emission from atoms or molecules other than oxygen ie., the concept can be applied more generally to light emission from the atmosphere of a planet that maintains sufficient intensity over varying satellite/planet/sun angles to allow determination of the Planet vector.

The Planet Vector Sensor is fixed to the spacecraft, and images the Planet, in particular the limb, where the signal is the strongest. By fitting the observed emission to the shape of the Planet, the Planet vector can be computed.

Two major technological innovation areas are enabling the new lower cost architectures for Planet Vector Sensors, as presented below, that allow for dramatically lower power consumption, mass and volume, and can allow for similar qualification process for LEO and GEO.

The first area with major progress is the field of uncooled detectors for the infrared observation band. Bolometer arrays fabricated using MEMS (Micro-Electro-Mechanical Systems) technologies are becoming available with high enough performance for Earth Vector Sensors applications. The emergence of this uncooled detector technology encourages the continued use of the proven far-infrared emission bands and allows the reuse of established algorithms.

The other area of rapid technological progress is the increased sensitivity and performance of CCDs and especially new CMOS-based detector technologies such as single-photon avalanche diode (SPAD) arrays. These techniques are highly sensitive in the visible bands and near-IR (0.4 $\mu$m to 1 $\mu$m wavelength).

Brief description of the drawings

For a more complete description of the present invention and for further objects and advantages thereof, reference is made to the following description, taken in conjunction with the accompanying drawings, which show:

Fig. 1   Limb measure of nightglow;

Fig. 2   Volume emission rate of the 02 (0-0) A-Band at different altitudes depending on local solar time and latitude (for planet Earth):

   A. Mean volume emission intensity at 60km altitude
   B. Mean volume emission intensity at 78km altitude
   C. Mean volume emission intensity at 93km altitude
   D. Mean volume emission intensity at 110km altitude

Fig. 3   Signal emitted by the airglow as seen from a GEO for different local solar times at zenith:

   A. Mean airglow emission at 24:00 Solar Local Time (SLT)
   B. Mean airglow emission at 06:00 SLT
   C. Mean airglow emission at 12:00 SLT

Fig. 4   Angular size of Planet Earth as seen from a LEO;

Fig. 5   Planet Vector Sensor configurations and geometries, according to the present invention. The dark circles mark the telescopes Field Of View (FOV), whereas the black arrays indicate the view of the active sensor elements.

   A. LEO case at 2'000 km altitude: Three telescopes each with a sensor array and a 20° FOV are used in this embodiment of the invention.
   B. GEO case at 36'000 km altitude: An embodiment with one telescope only, with a FOV of 20° and one detector array;

Fig. 6   Schematic cross-section of a low-cost Planet Vector Sensor, according to the present invention;

Fig. 7   A left. Simulated image of the airglow of Earth at 06:00 LST assuming a sufficient dynamic range to avoid saturation.

   A right. The Planet vector 92 is calculated by finding the best correlation between the theoretical circumference of the airglow and the measured maximum emission circle.
   B left . Simulated image of the airglow at 06:00 LST assuming the detector saturates under daytime conditions.
   B right. The Planet vector 92 is calculated by finding the best correlation between a theoretical disc and the saturated disc measured.

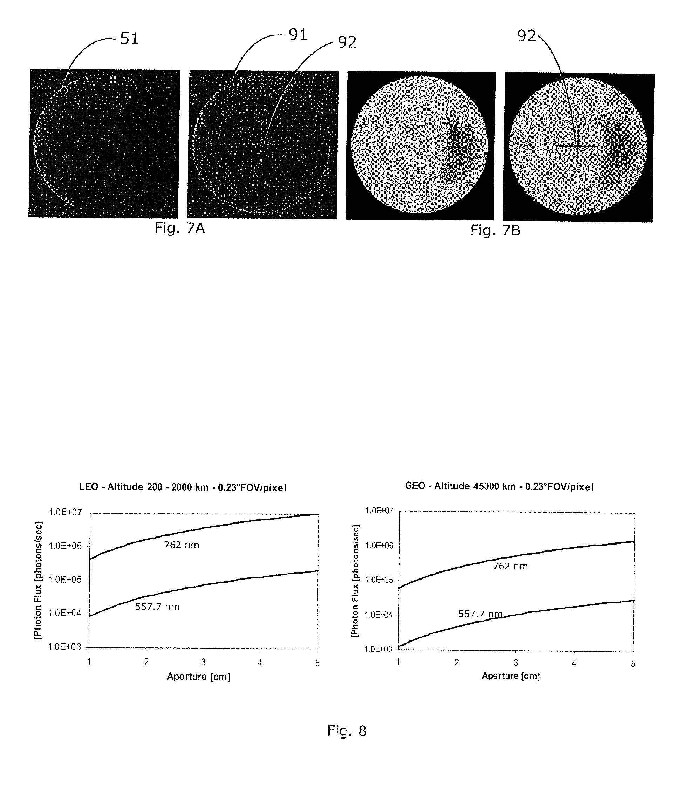

Fig. 8   Mean photon flux per pixel at night for different aperture sizes, assuming a FOV of 0.15°/pixel, for LEO (left) and GEO (right ).

DETAILED DESCRIPTION OF THE INVENTION

**Airglow Emissions**

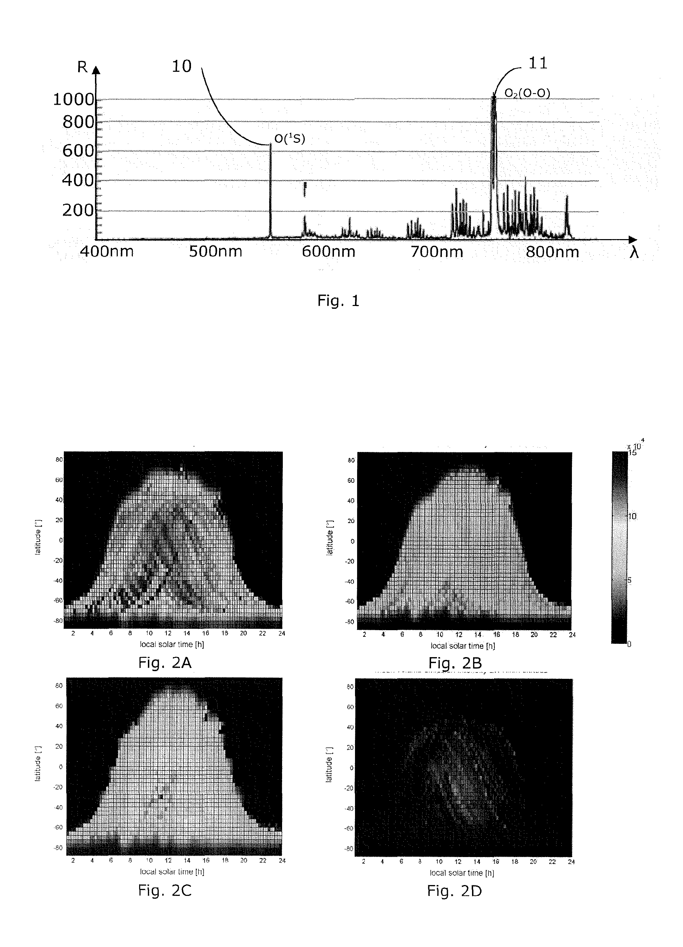

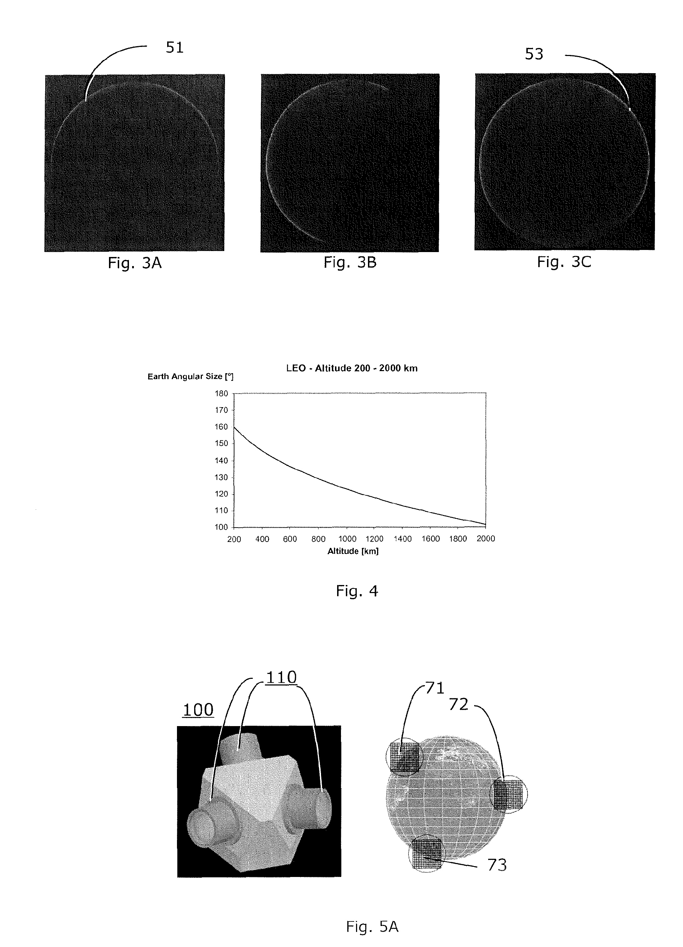

Atmospheric emissions in the wavelength band from 400 to 900 nm can be classified as: nightglow, dayglow and aurora. Although night- and dayglow are less luminous than an aurora, they are the only potential candidates for detection by a Planet Vector Sensor using the visible spectrum because of their permanence. Fig. 1 shows limb data of the limb 51 (cf. Fig. 3A) obtained in Low Earth Orbit (LEO) from Atlas 1 experiment showing the nighttime spectra at a wavelength between 400 and 900 nm for Earth. The emission is measured in Rayleighs [R]. The most prominent feature, visible from Planet, is a peak 10 representing the atomic oxygen O ($^1$S) green line at 557.7 nm, whereas the strongest airglow band, only visible from space, is a peak 11 representing the $O_2$(0-0) A-band at 762 nm. These two oxygen emission peeks 10 and 11 could be used as basis for the Planet Vector Sensor. For these two wavelengths, aurora and dayglow originates with direct photodissociation, photo-excitation and excitation by fast electrons or ion recombination. The origin of the nightglow is oxygen atom recombination, where the oxygen atoms are created in the daytime by solar photodissociation of $O_2$.

A number of studies exist on the temporal and latitudinal variability in the oxygen emissions in the 50-120 km region of the mesosphere and lower thermosphere of the Planet Earth. The main data on airglow emission were obtained with the Wind Imaging Interferometer (WINDII) and the High Resolution Doppler Imager (HRDI) on the UARS satellite and the Optical Spectrograph and Infrared Imager System (OSIRIS) on the ODIN satellite. They provide a wide database on the airglow emission rates of the 557.7 nm line 10 and the 762 nm band 11 for different altitudes, local times and latitudes. The oxygen airglow emission rate is modulated by gravity waves, by atmospheric tides and by semi-annual, annual and longer-term variations as for example the solar cycle. Several images reflecting these recorded data are available on the WINDII Science Page (http://www.windii.yorku.ca/science/science.html).

The 762 nm $O_2$(0-0) A-Band molecular oxygen band 11 emits the strongest airglow, with intensities varying from 2 kR to 1.5 MR at zenith and 20 kR and 18 MR at limb 51 (see Table 1). The limb emissions are 10 to 15 times stronger than the zenith emissions due to the fact that the emissions brightness represents an integrated volume emission rate along the line of sight. Thus, images of the airglow will be characterized by a continuously increasing emission intensity towards the limb 51, a peak brightness at an altitude of 60 km during day and 95 km at night and a sudden drop of the emissions intensity when reaching the maximum altitude of airglow emission around 120 km. The emission of the $O_2$(0-0) A-Band 11 is not visible from the Earth surface because of the deep absorption by the dense lower atmospheric $O_2$ - layer at an altitude of 60 km.

This is a significant advantage for space based observations since this layer will act as a filter for the rescattered emission by the Planet due to sun- or moonlight. Thus, the main sources of perturbation in the airglow are aurorae which emit weakly at 762 nm. Measurements of the 762 nm $O_2$(0-0) A-Band 11 can be used to get information about the ozone profile, the temperature climatology for mesopause region or atmospheric winds.

**Table 1**
**AIRGLOW OF THE $O_2$(0-0) A-BAND AT 762 NM**

|  | At zenith | At limb |
| --- | --- | --- |
| At night [R] | 2 k - 10 k | 20 k - 150 k |
| At day [R] | 200 k - 1.5 M | 4M-18M |
| Aurora perturbations | 200 - 7 k | 100 - 3.5 k |

The O($^1$S) green line 10 emission at 557.7 nm is the mostly extensively studied of the emissions. The main interest of the emission at 557.7 nm 10 is its visibility from the ground and the fact that it is closely related to the concentration of atomic oxygen density. Hence, the green line provides information on the ozone or atmospheric winds, similar to the emissions at 762 nm. However, the emissions at 557.7 nm are significantly weaker than those at 762 nm. Intensities vary between 40 R and 12 kR for zenith observations, respectively 450 R and 150 kR at the limb 51. Furthermore, aurorae have strong emissions at 557.7 nm and might seriously perturb the measurements of airglow (see Table 2).

**Table 2**
**AIRGLOW OF THE O($^1$S) GREEN LINE AT 557.7 NM**

|  | At zenith | At limb |
| --- | --- | --- |
| At night [R] | 40 - 400 | 450 - 4 k |
| At day [R] | 1.2 k - 12 k | 12 k - 150 k |
| Aurora perturbations | 1 k - 1 M | 0.5 k - 500 k |

For space observations, the emission of the $O_2$(0-0) A-Band 11 at 762 nm has several advantages compared to the 557.7 nm line 10. These emissions are stronger and less perturbed by background radiation or aurora effects. They provide a more constant and strong light source and hence the better basis for a Planet Vector Sensor.

**Planet Appearance Model at 762 nm**

In order to determine the requirements for the detector array 82, as presented and claimed herein, and the respective optical system 81 an Earth Appearance Model has been developed. This model simulates the appearance of the Planet Earth at 762 nm as seen from a satellite in a GEO and includes:

- The minimum, maximum and mean airglow emissions at 762 nm;
- Variations in emission intensity depending on the local solar time;

- Aurora effects around the poles; and
- Perturbations due to the moon (direct reflection form the sunlight).

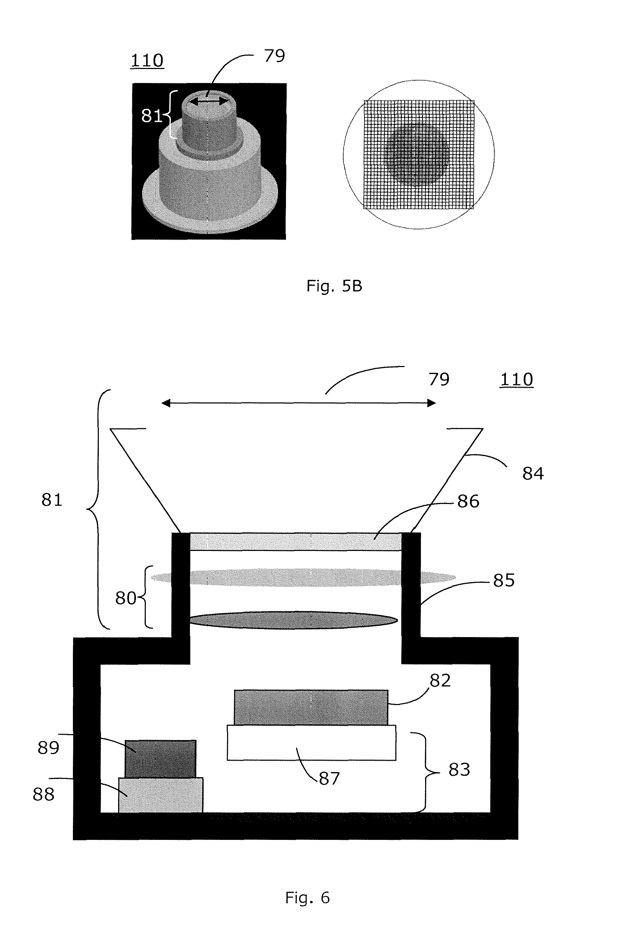

The Planet Appearance Model used by the present invention provides the mean, minimum and maximum expected photon flux on a pixel of a detector depending on the optical aperture 79 of the instrument (cf. Fig. 6) and the local solar time at zenith. It is based on the observations carried out by the High Resolution Doppler Imager (HRDI) instrument aboard the Upper Atmosphere Research Satellite (UARS). This instrument observed the emission of molecular oxygen above the limb 51 of the Earth in order to deduce from it information about atmospheric winds, temperature and ozone. Measurements of oxygen volume emission rates have been taken from 1991 to 1999 and cover almost all daylight and nocturnal time.

An analysis of the UARS data allowed identifying the main parameters for airglow emission: altitude, local solar time, latitude, seasonal variations and long-term variations. It is important to note that there are no significant variations depending on longitude. Since the Planet Appearance Model will be used to determine the requirements on the detector array and the optical system 81, it shall simulate the image of the Planet at 762 nm in the worst conditions for the Planet Sensor, hence when the largest variations in emission intensity are expected. Since the airglow has a strong dependence on the solar illumination, the biggest intensity gradient will be observed during winter and summer.

To simulate the image of the Planet as seen from a satellite, a 3-D space relating each point to a certain local solar time, altitude and latitude has been built. The image can be calculated by integrating the volume emission rate along the line of sight of each point of the image. The effective photon flux on a single pixel of the detector can be calculated with the formula

$$\Phi_{pixel} = \Phi_{airglow} \frac{1}{4\pi} 10^4 \cdot A_D \cdot \omega \qquad [\text{photons/s}^{-1}]$$

where $A_D$ is the aperture 79 of the telescope [m²] and $\omega$ is the solid acceptance angle [sr]. As shown in Figures 3A to 3C, there is always a signal emitted at the limb which is usable to calculate the Planet vector 92.

**Planet Vector Sensor Instrument design**

**Conceptual Design**

The angular size of the Planet differs significantly if it is seen from a LEO (100 ° to 160 °, see Figure 4) or a GEO, where the Planet's angular size is around 17 °. This difference has an important impact on the conceptual design of the inventive sensor.

The present invention relates to a modular and low-cost instrument design, which uses the same wavelength band, the same detector technology, the same optics, the same power and data interfaces and similar algorithms for both orbit classes. However, the optical geometry will be somewhat different for an instrument used in a GEO or in a LEO. Whereas a "single-tube" design 110 covers a field of view of 20° is best suited for GEO (cf. Fig. 5.B), a "multiple-tube" design 100 is used for LEO in order to provide the required field of view of 180 ° (cf. Fig. 5.A). For both geometries, the volume of the instrument is minimized, its mass does not exceed 750g and the power consumption is less than 5W. The instruments presented and claimed herein are simple and compact.

It is not necessary to have the detector cover the full FOV to accurately determine the Planet vector 92. Since the studied Planet is a sphere, the acquisition of two points of the limb 71, 72 is theoretically sufficient to determine the Planet's center. Nevertheless, further points 73 will be measured in order to improve the reliability of the data and provide redundancy.

**Mechanical Design**

The baseline instrument design of a preferred embodiment consists of an optical system 81, a detector 82 and an electronic circuit 83. The optical system 81 includes a baffle 84, a tube 85, a narrow-band filter 86 centered at 762 nm, focusing optics 80 with a 20° FOV (Field-Of-View) and preferably but not necessarily a micro-lens array bonded to the SPAD or CMOS or CCD detector array 82 in order to increase its fill-factor.

In a further embodiment the optical system further comprises a scanning mirror.

. The detector 82 could be CMOS, CCD or SPAD-array with at least 66 x 66 x pixels (but other detectors sizes are possible, e.g. a 512 x 512 CMOS chip). The optical system 81 and the detector 82 provide a $FOV_{pixel}$ smaller than

0.3° per pixel and a total FOV of 20°. An electronic circuit 83 drives the detector 82, processes the image data to determine the Planet vector 92 and provides the required voltage and current supply.

**Optical Design**

In view of the performance goals and cost drivers, the resolution for a system according to the present invention can be lower than for a photographic system. The detector 82 and the optical system 81 preferably provide a total FOV of 20° and a resolution to guarantee the targeted X,Y output accuracy of 0.6 ° for a GEO. No chromatic correction of the imaging optics is required since the preferred embodiment is working with only one wavelength.

A critical component of the optical system 81 is the narrow bandpass filter 86 used for background light suppression.

The filter wavelength and bandwidth is determined by the airglow sources. The large (20°) FOV imposes limits on minimum achievable bandwidth, since most filters are specified for light normal to the plane of the filter. Based on available limb 51 nightglow data, a 5 nm filter bandwidth is sufficient to ensure that most of the 762 nm band 11 is captured. Thermal consideration drive the choice of the effective bandwidth, filter type, as well as double or triple stage filters to eliminate IR and UV light that may pass through a high performance interference filter and degrade the detector 82 or the optics 81, or even the filter itself.

**Electrical Design**

The electronic circuit 83 of a preferred embodiment includes a first Printed Circuit Board (PCB) 87 with the Single-Photon Avalanche Diode (SPAD), Complementary Metal Oxide Semiconductor (CMOS) or Charge Coupled Device (CCD) detector array 82 and a microcontroller, and a second PCB 88 with an Application Specific Integrated Circuit (ASIC) 89 for image processing, interfacing and voltage regulators.

**Algorithms**

The calculations used to determine the Planet's vector according to the present invention, are designed to be as simple as possible, but still reliable and robust. As a first iteration, a simple algorithm is used, based on the following concept: Since the satellite altitude is known, the radius of a theoretical circle 91 on the image corresponding to the maximum airglow or maximum airglow altitude is known. The algorithm finds the best correlation between the measured emissions and this theoretical circle 91. There are two options to image the airglow: one is based on saturation of the pixels where the airglow emission occur, the other is working with no or with only limited saturation (cf. Figure 7).

An algorithm working on saturation is simpler and is insensitive to perturbations due to background radiation, aurora effects or other variations in airglow intensity. The control of the detector 82 thus is simpler since the read-out frequency is lower. However, the edge detection is less precise and might reduce the accuracy of the Planet vector 92 calculations (cf. Fig. 7B).

If no saturation is tolerated (cf. Fig. 7A), the accuracy of the Planet Vector Sensor could be improved by increasing the precision of the Planet limb 51 detection. However, some pre-processing like detection of variations in intensities or local maxima might be required to improve the robustness of the algorithm. Special attention has to be paid on the effect of the zone around solar terminator, the moon and the sun. The algorithm has to be able to calculate the Planet Vector 92 even if it is perturbed by these phenomena.

In both cases the reliability of this method is higher for an observation from GEO than from LEO, since a larger part of the circumference 53 of the Planet will be imaged on the detector 82. Thus, the theoretical circle 91 can be amore accurately fitted. For an image of the airglow taken from LEO only smaller segments of the circle will be visible. Furthermore, the LEO algorithm must determine the Planet vector 92 even if one telescope does not give useful information (because it points at the sun for example).

**Performance**

The performance of the instrument according to a preferred embodiment of the present invention depend on the aperture 79 of the optical system 81, the integration time (and hence the refresh rate) of the measurements, the design of the detector and its read-out method, the way of imaging the airglow (with saturation or not) and the algorithm used to calculate the Planet Vector 92. All these parameters are strongly interconnected: The algorithm determines the way of imaging the airglow and hence the read-out method of the detector 82 and the maximum accepted photon flux before saturation. The aperture size 79 and the integration time affect the minimum photon flux on the detector 92 and thus the Signal-To-Noise-Ratio. Figure 8 shows the mean incident photon flux onto a pixel of the detector for limb measurements at night, depending on the telescope aperture 79 and the satellite altitude.

A good compromise has to be found to guarantee a robust airglow signal. Based on an initial trade-off, the aperture 79 of the telescope of a preferred embodiment is 10 mm. Assuming a SPAD-array with a Photon Detection Propability (PDP) of 5 %, an effective Fill Factor (FF) of 15 % and a Dark Count Rate (DCR) of 300 Hz, the minimum integration time to guarantee a SNR of 20 for a measurement of the 762nm band is 0.05 s for a LEO and 0.50 s for a GEO.

By choosing an appropriate algorithm, the output accuracy for a LEO and a GEO is equal to the half the FOV of one pixel in one possible embodiment (<0.3°).

The targeted XY output accuracy for the present embodiment is 5° for LEO and 0.6° for GEO. A first baseline design of the Planet Sensor according to the present invention is summarized in Table 3.

**Table 3**
**AIRGLOW OF THE O($^1$S) GREEN LINE AT 557.7 NM**

|  | Baseline design for a LEO application | Baseline design for a GEO application |
|---|---|---|
| Optical system | | |
| Geometry | "multi-tube" design | "single-tube" design |
| Aperture | 10 mm | 10 mm |
| Focal length | 14 mm | 14 mm |
| Total FOV | 3 x 20° | 20° |
| FOV per pixel | 0.16°/pixel | 0.16°/pixel |
| Detector | | |
| Array size | 3 x (128 pixels x 128 pixels) | 128 pixels x 128 pixels |
| Pixel size | 60 $\mu$m x 60 $\mu$m | 60 $\mu$m x 60 $\mu$m |
| Planet Sensor | | |
| Output | | |
| SNR | $\geq 10$ | $\geq 10$ |
| Targeted X,Y accuracy 2 σ | 5° | 0.6° |

**Claims**

1.  A method to determine the Planet vector (92) from a point remote from the Planet by a detection of visible or near visible light, comprising the steps:

    - imaging of atmospheric gas emission of the Planet to provide corresponding image data,
    - acquisition of at least two points of the limb (51) of the Planet
    - processing the image data, and
    - determining the Planet vector (92).

2.  The method of claim 1 wherein the imaging of atmospheric gas emission is based on a saturation of pixels of a respective detector (82) used for the imaging where the atmospheric gas emission occurs.

3.  The method of claim 1 wherein the imaging of atmospheric gas emission is based on detection of variations in intensities or local maxima of the atmospheric gas emission.

4.  The method of claim 1 where the imaging of atmospheric gas emission is an imaging of atmospheric oxygen emission.

5.  The method of claim 4 wherein the imaging of atmospheric oxygen emission is performed at a 762nm wavelength (11).

6.  The method of claim 4 wherein the imaging of atmospheric oxygen emission is performed at a 557.7nm wavelength (10).

7.  The method of one of the preceding claims wherein determining the Planet vector (92) comprises the steps:

- calculating the radius of a theoretical circle (91) on an image obtained by the imaging corresponding to a maximum of the atmospheric oxygen emission or, and
- finding the best correlation between the atmospheric oxygen emission obtained by the imaging and said theoretical circle (91).

8. A system for determining the Planet vector (92) from a point remote from the Planet comprising:

   - an optical system (81);
   - a detector (82), and
   - an electronic circuit (83)

   wherein said optical system (81) receives and guides visible or near visible light received from the atmosphere of said Planet to said detector (82), and
   wherein said electronic circuit (83) processes image data provided by the detector (82).

9. A system according to claim 8 wherein the optical system (81) comprises:

   - a baffle (84) ;
   - a tube (85);
   - a narrow bandpass filter (86);
   - focusing optics (80), and
   - a lens array bonded or attached to the detector (82),

   wherein said baffle (84) is used for preventing unwanted scattered light to enter the tube (85), said narrow bandpass filter (86) is used for background light suppression, and wherein the lens array is provided in order to increase the fill-factor of the detector (82).

10. A system according to claim 8 wherein the detector (82) is

   - a Complementary Metal Oxide Semiconductor,
   - a Charge Coupled Device, or
   - a Single-Photon Avalanche Diode

   array.

11. A system according to claim 8 wherein the electronic circuit (83) comprises:

   - a first Printed Circuit Board (87) with the detector (82) and a microcontroller, and
   - a second Printed Circuit Board (88) with an Integrated Circuit, preferably an Application Specific Integrated Circuit (89), for image processing, interfacing and voltage regulators.

12. A multiple-tube arrangement (100) for determining the Planet vector (92) from a point remote from the Planet to be used on the Lower Planet Orbit comprising an arrangement of at least three systems according to at least one of the claims 8 to 11.

13. A single-tube arrangement (110) for determining the Planet vector (92) from a point remote from the Planet to be used on the Geostationary Planet Orbit comprising one single system according to at least one of the claims 8 to 11.

14. A system according to at least one of the claims 8 to 13 where the optical system further comprises a scanning mirror.


**Amended claims in accordance with Rule 137(2) EPC.**

1. A method to determine the Planet vector (92) from a point remote from the Planet by a detection of visible or near visible light, comprising the steps:

   - imaging of the Planet to provide corresponding image data,
   - acquisition of at least two points of the limb (51) of the Planet

- processing the image data, and
- determining the Planet vector (92),

**characterized in that**,

said imaging of the Planet is an imaging of atmospheric gas emission of the Planet and the step of determining the Planet vector (92) further comprises the steps:

- calculating the radius of a theoretical circle (91) on an image obtained by the imaging corresponding to a maximum of the atmospheric gas emission, and
- finding the best correlation between the atmospheric gas emission obtained by the imaging and said theoretical circle (91).

**2.** The method of claim 1 wherein the imaging of atmospheric gas emission is based on a saturation of pixels of a respective detector (82) used for the imaging where the atmospheric gas emission occurs.

**3.** The method of claim 1 wherein the imaging of atmospheric gas emission is based on detection of variations in intensities or local maxima of the atmospheric gas emission.

**4.** The method of claim 1 where the imaging of atmospheric gas emission is an imaging of atmospheric oxygen emission.

**5.** The method of claim 4 wherein the imaging of atmospheric oxygen emission is performed at a 762nm wavelength (11).

**6.** The method of claim 4 wherein the imaging of atmospheric oxygen emission is performed at a 557.7nm wavelength (10).

**7.** A system for determining the Planet vector (92) from a point remote from the Planet comprising:

- an optical system (81);
- a detector (82), and
- an electronic circuit (83)

wherein said optical system (81) receives and guides visible or near visible light received from the atmosphere of said Planet to said detector (82), and
wherein said electronic circuit (83) processes image data provided by the detector (82).

**8.** A system according to claim 7 wherein the optical system (81) comprises:

- a baffle (84) ;
- a tube (85);
- a narrow bandpass filter (86);
- focusing optics (80), and
- a lens array bonded or attached to the detector (82),

wherein said baffle (84) is used for preventing unwanted scattered light to enter the tube (85), said narrow bandpass filter (86) is used for background light suppression, and wherein the lens array is provided in order to increase the fill-factor of the detector (82).

**9.** A system according to claim 7 wherein the detector (82) is

- a Complementary Metal Oxide Semiconductor,
- a Charge Coupled Device, or
- a Single-Photon Avalanche Diode

array.

**10.** A system according to claim 7 wherein the electronic circuit (83) comprises:

- a first Printed Circuit Board (87) with the detector (82) and a microcontroller, and
- a second Printed Circuit Board (88) with an Integrated Circuit, preferably an Application Specific Integrated Circuit (89), for image processing, interfacing and voltage regulators.

**11.** A multiple-tube arrangement (100) for determining the Planet vector (92) from a point remote from the Planet to be used on the Lower Planet Orbit comprising an arrangement of at least three systems according to at least one of the claims 7 to 10.

**12.** A single-tube arrangement (110) for determining the Planet vector (92) from a point remote from the Planet to be used on the Geostationary Planet Orbit comprising one single system according to at least one of the claims 7 to 10.

**13.** A system according to at least one of the claims 7 to 12 where the optical system further comprises a scanning mirror.

Fig. 1

Fig. 2A

Fig. 2B

Fig. 2C

Fig. 2D

51

Fig. 3A

53

Fig. 3B

Fig. 3C

**LEO - Altitude 200 - 2000 km**

Earth Angular Size [°]

Altitude [km]

Fig. 4

100

110

71

72

73

Fig. 5A

Fig. 5B

Fig. 6

Fig. 7A

Fig. 7B

LEO - Altitude 200 - 2000 km - 0.23°FOV/pixel

GEO - Altitude 45000 km - 0.23°FOV/pixel

Fig. 8

**European Patent Office**

## EUROPEAN SEARCH REPORT

Application Number

EP 07 10 0968

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 628 206 A (ASTHEIMER ROBERT W [US]) 9 December 1986 (1986-12-09) | 1,3,4, 8-11,13, 14 | INV. G01J1/42 B64G1/36 |
| Y | * column 1, line 6 - line 31 * * column 3, line 5 - column 4, line 30; figures 4,5 * | 9 | G01S3/786 G05D1/08 |
| X | FR 2 533 883 A1 (SODERN [FR]) 6 April 1984 (1984-04-06) | 1,3-6,8, 10,11,13 | |
| Y | * page 5, line 5 - page 8, line 36; figures 2-4 * | 9 | |
| X | US 5 646 723 A (FALLON JAMES J [US]) 8 July 1997 (1997-07-08) | 8,10-13 | |
| Y | * column 3, line 16 - column 5, line 43; figures 1-4 * | 9 | |
| X | EP 0 405 678 B1 (SODERN [FR]; PHILIPS NV [NL] SODERN [FR]; PHILIPS ELECTRONICS NV [NL]) 31 May 1995 (1995-05-31) * column 4, line 4 - column 5, line 22; claims 1-4 * | 8,10,11, 13 | |
| A | US 2002/121574 A1 (DAVIS JOHN E [US]) 5 September 2002 (2002-09-05) * paragraph [0020] - paragraph [0027] * * paragraph [0035] - paragraph [0044]; figures 1-6 * | 1-14 | |

**TECHNICAL FIELDS SEARCHED (IPC)**

G01J
B64G
G01S
G05D

The present search report has been drawn up for all claims

| Place of search | Date of completion of the search | Examiner |
|---|---|---|
| Munich | 27 June 2007 | Besser, Veronika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 10 0968

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2007

| Patent document cited in search report | | Publication date | Patent family member(s) | | Publication date |
|---|---|---|---|---|---|
| US 4628206 | A | 09-12-1986 | NONE | | |
| FR 2533883 | A1 | 06-04-1984 | NONE | | |
| US 5646723 | A | 08-07-1997 | NONE | | |
| EP 0405678 | B1 | 31-05-1995 | DE | 69019782 D1 | 06-07-1995 |
| | | | DE | 69019782 T2 | 07-12-1995 |
| | | | EP | 0405678 A1 | 02-01-1991 |
| | | | FR | 2649196 A1 | 04-01-1991 |
| US 2002121574 | A1 | 05-09-2002 | NONE | | |

EPO FORM P0459

For more details about this annex : see Official Journal of the European Patent Office, No. 12/82